# EUROPEAN PATENT APPLICATION

(11) **EP 4 169 962 A1**
(43) Date of publication of application: **26.04.2023**
(21) Application number: 21203914.3
(22) Date of filing: 21.10.2021
(51) Int. Cl.: C08G 18/22, C08G 18/62, C08G 18/79, B01J 31/00, B01J 33/00, B01J 35/00

(54) **ENCAPSULATED POLYURETHANE POLYMERIZATION CATALYST AND LATENT REACTIVE POLYURETHANE COMPOSITION**

(71) Applicant: Covestro Deutschland AG, 51373 Leverkusen (DE)
(72) Inventor: BOUVIER, Quentin, 51469 Bergisch Gladbach (DE); EIDEN, Stefanie, 50733 Köln (DE); LAAS, Hans-Josef, 51519 Odenthal (DE)
(74) Representative: Levpat

(57) **Abstract**

The present invention relates to a method for producing an encapsulated polyurethane polymerization catalyst, an encapsulated polyurethane polymerization catalyst and a use of said encapsulated polyurethane polymerization catalyst, especially in polyurethane coating or adhesive compositions. Furthermore, the invention relates to a latent reactive polyurethane composition comprising the inventive encapsulated polyurethane polymerization catalyst, a method for the production of a polyurethane coating or adhesive from said latent reactive polyurethane composition and a use of said latent reactive polyurethane composition for producing polyurethanes, especially polyurethane coatings or adhesives. In addition, the invention relates to a method for producing a coated substrate by means of said latent reactive polyurethane composition.

## Description

The present invention relates to a method for producing an encapsulated polyurethane polymerization catalyst, an encapsulated polyurethane polymerization catalyst and a use of said encapsulated polyurethane polymerization catalyst, especially in polyurethane coating or adhesive compositions. Furthermore, the invention relates to a latent reactive polyurethane composition comprising the inventive encapsulated polyurethane polymerization catalyst, a method for the production of a polyurethane coating or adhesive from said latent reactive polyurethane composition and a use of said latent reactive polyurethane composition for producing polyurethanes, especially polyurethane coatings or adhesives. In addition, the invention relates to a method for producing a coated substrate by means of said latent reactive polyurethane composition.

### Background

The use of catalysts for producing polyurethanes by reacting one or more polyisocyanates with one or more isocyanate-reactive compounds such as polyols in several applications such as in polyurethane coatings or adhesives is well-known and long established in the art. Such catalysts are especially needed when slower reacting polyisocyanates, in particular aliphatic polyisocyanates, are being used.

With regard to polyurethane coatings, two main classes of polyurethane catalysts are used - namely amines and metal-based catalysts - the latter being the most common type of catalysts used for such applications. Dibutyl tin dilaurate (DBTL) is one of the most widespread polyurethane catalysts, but has recently been re-classified as reproductively toxic by the European Commission. Notwithstanding, alternative catalysts such as zinc carboxylates and bismuth carboxylates, among many others, are known alternatives for dibutyl tin dilaurate in specific coating formulations.

However, the aforementioned catalysts have the disadvantage that they accelerate the reaction between the polyol and the polyisocyanate as soon as the catalyst is added, which for instances reduces the pot life (or working time) of the polyurethane composition, hence only giving a narrow processing window for processing such polyurethane compositions. Indeed, a good pot life is especially important for two-component polyurethane adhesives (so called "2K systems"), where a polyisocyanate is usually mixed with a polyol and a catalyst before the application on for instance a substrate.

Therefore it is of great interest to be able to control the catalyst activity in such a way that the reaction of the components of the composition is only accelerated after the application has been completed by means of a specific external stimulus or trigger. This would allow for an improved pot life of the polyurethane composition and simplify the application of polyurethane coatings or adhesives.

Catalysts that start catalyzing a reaction only by means of external stimulus or trigger are known as latent catalysts, wherein the respective systems - in which the latent catalysts are used - are known as latent reactive systems. Regarding two-component polyurethane compositions, latent catalysts are also known in the art, as for example the thermolatent catalysts as disclosed in WO 2011/051247 A1.

One other possible approach to design latent reactive polyurethane systems is the use of catalysts which at first must be activated by UV-radiation to make them reactive to urethane reaction. Such photolatent catalysts are disclosed in WO 2007/147851 A1, for example. Nevertheless, polyurethane compositions containing such photolatent catalysts have the disadvantage that they usually cannot be pigmented or colored as this would hinder the UV-radiation from activating the catalyst. A further problem might arise if such catalysts shall be used in adhesive formulations for non-transparent materials to be joined, as after assembling the two layers of non-transparent material the adhesive layer therebetween cannot be reached by UV-light any longer. Another disadvantage stems from the fact that photolatent catalysts generally bear a photolabile group, hence well-known catalysts have to be synthetically modified, which in turn is sometimes difficult or not possible at all.

Thus it was an object of the present invention to provide a latent reactive polyurethane polymerization catalyst which allows to be used also in colored or pigmented polyurethane systems, such as coatings or varnishes, and which can also be used in latent reactive polyurethane adhesive and coating formulations, especially two-component polyurethane adhesive and coating formulations, for assembling non-transparent materials, like metal sheets. Moreover it was an object of the present invention to provide a latent reactive polyurethane polymerization catalyst that uses known polyurethane polymerization catalyst without synthetically modifying them. Furthermore it was an object of the present invention to provide a latent reactive polyurethane composition, especially in the form of a polyurethane coating or a polyurethane adhesive composition, which comprises said catalyst.

The object has been solved by a method for producing an encapsulated polyurethane polymerization catalyst, wherein the method comprises in a variant a) the steps of
a1) Preparing a mixture comprising a solvent, an encapsulation polymer having a melting point of from 40 to 130 °C, determined by Differential Scanning Calorimetry (DSC), a polyurethane polymerization metal catalyst and a hydrophobic compound;
a2) Adding the mixture of step a1) to an aqueous solution comprising water, a non-ionic surfactant and/or an ionic surfactant to form a suspension containing the encapsulated polyurethane polymerization catalyst; or according to a variant b), the method comprises the steps of
b1) Preparing an organic phase comprising or consisting of a water-saturated solvent solution comprising an encapsulation polymer having a melting point of from 40 to 130 °C, determined by Differential Scanning Calorimetry (DSC), a polyurethane polymerization metal catalyst and a hydrophobic compound;
b2) Preparing an aqueous phase comprising or consisting of a solvent-saturated water solution comprising a non-ionic and an ionic surfactant;
b3) Mixing the organic phase of step b1) with the aqueous phase of step b2), in particular adding the organic phase of step b1) to the aqueous phase of step b2), and emulsifying the phases to form an emulsion;
b4) Adding water to the emulsion of step b3) to form a suspension containing the encapsulated polyurethane polymerization catalyst,
wherein the hydrophobic compound in variant a) and variant b) is liquid at 25 °C and has a water miscibility at 25 °C of 5 mg/L or less and wherein in variant a)
- the hydrophobic compound is not an ester of glycerol if the aqueous solution does not comprise an ionic surfactant; and
- if no ionic surfactant is used in step a2), the non-ionic surfactant comprises a polyoxyethylenesorbitan monooleate.

The melting point of the encapsulation polymer is defined as being determined by Differential Scanning Calorimetry (DSC; DSC821e, Mettler Toledo). In this method, samples of 3 mg were weighed directly in an aluminum pierced pan on an analytical balance. The pan was heated under nitrogen atmosphere (rate: 55 ml/min.) from 30°C to 300°C at a heating rate of 10°C/min. Except not otherwise stated, all melting points of polymers given in this application are understood as being determined by this method.

The invention further relates to an encapsulated polyurethane polymerization catalyst obtained or obtainable by the inventive method.

A further object of the invention relates to an encapsulated polyurethane polymerization catalyst having a core-shell structure, wherein the shell comprises or consists of an encapsulation polymer having a melting point of from 40 to 130 °C, determined by Differential Scanning Calorimetry (DSC), and wherein the core comprises or consists of a polyurethane polymerization metal catalyst, a non-ionic and/or an ionic surfactant and a hydrophobic compound.

Another object of the invention relates to a use of the inventive encapsulated polyurethane polymerization catalyst in latent reactive polyurethane compositions, especially in latent reactive polyurethane coating or adhesive compositions.

The invention further relates to a latent reactive polyurethane composition comprising the components:
A) a polyol,
B) a polyisocyanate,
C) the encapsulated polyurethane polymerization catalyst according to claim 22 or 23, and
D) optionally auxiliary and additional compounds.

The invention also relates to a method for the production of a polyurethane coating or adhesive from the inventive latent reactive polyurethane composition by heating the latent reactive polyurethane composition to at least the melting point of the encapsulation polymer to release the polyurethane polymerization metal catalyst from the encapsulated polyurethane polymerization catalyst and reacting the components of the latent reactive polyurethane composition to form the polyurethane coating or adhesive.

Moreover the invention relates to a use of the inventive latent reactive polyurethane composition for producing polyurethanes, especially polyurethane coatings or adhesives.

Finally the invention further relates to a method for producing a coated substrate, comprising the steps:
- Applying a latent reactive polyurethane composition according to claim 25 onto a substrate, preferably metal, wood, glass, stone, ceramic materials, concrete, hard and flexible plastics, textiles, leather and paper, which can optionally also be coated with conventional primers before coating.
- Heating the latent reactive polyurethane composition to at least the melting point of the encapsulation polymer to release the polyurethane polymerization metal catalyst from the encapsulated polyurethane polymerization catalyst and reacting the components of the latent reactive polyurethane composition to form the coated substrate.

In the course of the development work, which has led to the present invention, it was surprisingly found that encapsulated polyurethane polymerization catalysts, which are constructed of encapsulation polymers having a melting point of 40 to 130 °C, and further comprise a surfactant as well as a hydrophobic compound are suitable for enclosing well-known polyurethane polymerization metal catalyst and controlling the catalyst activity in polyurethane compositions by means of an external stimulus, i.e. thermal initiation. Thus it is possible to provide latent reactive polyurethane compositions, especially latent reactive polyurethane coating or adhesive compositions, wherein the catalyst is only released upon heating to a certain temperature, i.e. the melting point of the polymer. With the catalyst according to the invention, properties of polyurethane compositions such as for instance the pot life can thus also be improved.

### Definitions:

In the context of the invention encapsulated polyurethane polymerization catalysts are to be understood as polymer-based, meaning they are shaped, constructed or formed by the used encapsulation polymer having a melting point of from 40 to 130 °C, preferably of from 40 to 120 °C, more preferably of from 45 to 80 °C, even more preferably of from 50 to 70 °C, wherein the melting point is determined by Differential Scanning Calorimetry (DSC) according to the method mentioned above. Other components such as the polyurethane polymerization metal catalyst, the surfactant and the hydrophobic compound are encapsulated. The term "encapsulated" is to be understood synonymous to terms like "enclosed", "entrapped", "embedded", "adsorbed" or "dispersed", wherein the type of encapsulation generally depends on the morphology of the encapsulated polyurethane polymerization catalysts. Hence, encapsulated polyurethane polymerization catalysts according to the invention can be present in the form of particles, preferably nanoparticles such as nanocapsules and/or nanospheres.

The encapsulated polyurethane polymerization catalyst preferably has a core-shell structure, wherein the shell comprises or consists of the encapsulation polymer having a melting point of from 40 to 130 °C and wherein the core comprises or consists of a polyurethane polymerization metal catalyst, a surfactant and a hydrophobic compound, whereas these components, especially the surfactant, can also be adsorbed at the surface of the polymer. The encapsulated polyurethane polymerization catalyst is preferably present in form of nanocapsules and/or nanospheres, hence a core-shell structure is to be understood that also a polymer matrix can be present.

The term "pot life" is to be understood as the time period during which the polyurethane composition is processable after mixing all components - i.e. a polyisocyanate, a polyol, a catalyst and possibly further components - before the viscosity through the advancing crosslinking reaction has become too high for further processing. In the presence of the inventive catalyst, the reaction of the polyisocyanate and polyol only proceeds uncatalyzed until the thermal activation due to the encapsulation of the polyurethane polymerization. Thus the pot life of polyurethane composition can be improved with the inventive catalyst.

### Detailed Description

### Methods for producing the encapsulated polyurethane polymerization catalyst:

The encapsulated polyurethane polymerization catalyst can be produced (or obtained) by a method according to a variant a) or a variant b), which are described in more detail in the following.

### Variant a):

In a step a1) a mixture comprising a solvent, an encapsulation polymer having a melting point of from 40 to 130 °C, determined by Differential Scanning Calorimetry (DSC), a polyurethane polymerization metal catalyst and a hydrophobic compound is prepared. In a step a2) the mixture of step a1) is added to an aqueous solution comprising water, a non-ionic surfactant and/or an ionic surfactant to form a suspension containing the encapsulated polyurethane polymerization catalyst.

In this variant a) the hydrophobic compound is liquid at 25 °C and has a water miscibility at 25 °C of 5 mg/L or less and the hydrophobic compound is not an ester of glycerol if the aqueous solution does not comprise an ionic surfactant, and if no ionic surfactant is used in step a2), the non-ionic surfactant comprises a polyoxyethylenesorbitan monooleate.

In a preferred embodiment, in variant a) the hydrophobic compound is not an ester of glycerol if the aqueous solution does not comprise an ionic surfactant and comprises a polyoxyethylenesorbitan monooleate as non-ionic surfactant.

The encapsulated polyurethane polymerization catalyst is preferably separated from the suspension yielded in a2), in particular by evaporation of the liquid phase and/or by freeze-drying.

Furthermore, the solvent in step a1) is preferably selected from the group comprising or consisting of acetone, ethanol, acetonitrile, dimethylformamide or mixtures thereof. In a preferred embodiment, acetone is used as solvent in step a1).

It is a further preferred embodiment that in variant a) the ratio of the solvent to
- the encapsulation polymer is 0,01 to 1,5 (mL/mg), preferably 0,05 to 1,0 (mL/mg), more preferably 0,1 to 0,5 (mL/mg), even more preferably 0,15 to 0,25 (mL/mg);
- the polyurethane polymerization metal catalyst is 0,01 to 1,5 (mL/mg), preferably 0,05 to 1,0 (mL/mg), more preferably 0,1 to 0,5 (mL/mg), even more preferably 0,15 to 0,25 (mL/mg); and/or
- the hydrophobic compound is 0,01 to 1,0 (mL/mg), preferably 0,035 to 0,75 (mL/mg), more preferably 0,05 to 0,5 (mL/mg), even more preferably 0,075 to 0,2 (mL/mg);
and/or the aqueous solution contains 0,1 to 2,0 wt.-%, preferably 0,25 to 1,5 wt.-%, more preferably 0,5 to 1,0 wt.-% of the non-ionic surfactant and/or the ionic-surfactant, based on the weight of the aqueous solution.

Moreover it is preferred that in variant a), step a2) the ratio of the mixture of step a1) to the aqueous solution is from 0,1 to 1,0, preferably 0,2 to 0,8, even more preferably 0,4 to 0,7.

### Variant b):

The encapsulated polyurethane polymerization catalyst can also be synthesized by a variant b). This method involves in a step b1) preparing an organic phase comprising or consisting of a water-saturated solvent solution comprising an encapsulation polymer having a melting point of from 40 to 130 °C, determined by Differential Scanning Calorimetry (DSC), a polyurethane polymerization metal catalyst and a hydrophobic compound and in a step b2) preparing an aqueous phase comprising or consisting of a solvent-saturated water solution comprising a non-ionic and an ionic surfactant.

The term saturated is to be understood that the solution contains the maximum amount of solute that is capable of being dissolved. In a preferred embodiment, the solvents of the solvent-saturated water solution and the water-saturated solvent solution in steps b1) and b2) are independently selected from the group comprising or consisting of ethyl acetate, methyl ethyl ketone, methyl acetate, butyl acetate, n-butanol or mixtures thereof, in particular ethyl acetate, methyl ethyl ketone or mixtures thereof, whereas the solvents of the solvent-saturated water solution and the water-saturated solvent solution in steps b1) and b2) are preferably the same.

In a step b3) the organic phase of step b1) is mixed with the aqueous phase of step b2), in particular adding the organic phase of step b1) to the aqueous phase of step b2), and emulsifying the phases to form an emulsion.

In a step b4) water is added to the emulsion of step b3) to form a suspension containing the encapsulated polyurethane polymerization catalyst.

In this variant b) the hydrophobic compound is liquid at 25 °C and has a water miscibility at 25 °C of 5 mg/L or less.

The encapsulated polyurethane polymerization catalyst is preferably separated from the suspension yielded in b4), in particular by evaporation of the liquid phase and/or by freeze-drying.

It is a further preferred embodiment that in variant b) in step b1) the ratio of the organic phase to
- the encapsulation polymer is 0,01 to 0,5 (mL/mg), preferably 0,02 to 0,3 (mL/mg), more preferably 0,03 to 0,2 (mL/mg), even more preferably 0,04 to 0,1 (mL/mg);
- the polyurethane polymerization metal catalyst is 0,01 to 0,5 (mL/mg), preferably 0,02 to 0,3 (mL/mg), more preferably 0,03 to 0,2 (mL/mg), even more preferably 0,04 to 0,1 (mL/mg); and/or
- the hydrophobic compound is 0,01 to 0,1 (mL/mg), preferably 0,015 to 0,08 (mL/mg), more preferably 0,02 to 0,07 (mL/mg), even more preferably 0,02 to 0,06 (mL/mg);
and/or in step b2) the aqueous phase contains 0,1 to 2,0 wt.-%, preferably 0,5 to 1,5 wt.-%, more preferably 0,75 to 1,25 wt.-% of the non-ionic surfactant and the ionic-surfactant, based on the weight of the aqueous phase.

Moreover it is preferred that in variant b), step b3) the ratio of the organic phase to the aqueous phase is from 0,05 to 0,5, preferably 0,1 to 0,4, even more preferably 0,2 to 0,3.

Furthermore it is preferred that in variant b), step b4) the ratio of the added water to the emulsion is 0,1 to 10,0, preferably 0,5 to 7,5, even more preferably 1,0 to 5,0.

### Components:

### Encapsulation Polymer:

As an encapsulation polymer, an encapsulation polymer having a melting point of from 40 to 130 °C is used. The encapsulation polymer preferably has a melting point of from 40 to 120 °C, more preferably of from 45 to 80 °C, even more preferably of from 50 to 70 °C. The melting point of the encapsulation polymer is determined by Differential Scanning Calormetry (DSC) according to the method mentioned above.

It is preferred that the encapsulation polymer is selected from the group comprising or consisting of polycaprolactones, polycaprolactone-polylactic acid co-polymers, polyethylene glycol, polycarpolactone-poly(glycolide-co-L-lactide) co-polymers, or mixtures thereof.

In a preferred embodiment, polycaprolactones or co-polymers thereof are used as the encapsulation polymer. In particular, the polycaprolactone has a molecular mass of 10 kDa, 45 kDa or 80 kDa, wherein a molecular mass of 45 kDa is especially preferred.

The polyethylene glycols preferably have a molecular weight of 1000 to 20000 kDa. Examples for suitable polyethylene glycols are polyethylene glycol 1500 (PEG-1500), polyethylene glycol 4000 (PEG-4000) and polyethylene glycol 6000 (PEG-6000).

### Polyurethane polymerization metal catalyst:

The polyurethane polymerization metal catalyst is preferably selected from the group comprising or consisting of metal salts, more preferably metal carboxylates, even more preferably zinc bis(2-ethylhexanoate), bismuth tri(2-ethylhexanoate), or mixtures thereof.

### Surfactant:

The non-ionic surfactant is preferably selected from the group comprising or consisting of poloxamers and polyoxyethylenesorbitan monooleate (also called Polysorbate 80 or Tween^{®} 80), and/ or the ionic surfactant is preferably selected from sodium dodecyl sulfate, cetyltrimethylammonium bromide or mixtures thereof and/or in variant a) the non-ionic surfactant is a mixture of a poloxamer and polyoxyethylenesorbitan monooleate or a poloxamer and an ionic surfactant selected from sodium dodecyl sulfate, cetyltrimethylammonium bromide or mixtures thereof.

In a further preferred embodiment, in variant a) if no ionic surfactant is used in step a2), the non-ionic surfactant comprises a poloxamer and a polyoxyethylenesorbitan monooleate.

The poloxamers are preferentially Poloxamer 188 (Pluronic^{®} F-68, PF68), Poloxamer 105 (Pluronic^{®} L-35, PL35), Poloxamer 407 (Pluronic^{®} F-127, PF127) or mixtures thereof.

Ionic surfactants are to be understood that they comprise or consist of anionic (such as for instance sodium dodecyl sulfate) or cationic surfactants (such as cetyltrimethylammonium bromide).

### Hydrophobic compound:

The Hydrophobic compound used in variant a) and b) is liquid at 25 °C and has a water miscibility at 25 °C of 5 mg/L, preferably 1 mg/L or less.

In a preferred embodiment, the hydrophobic compound is selected from the group, comprising or consisting of alkanes, aldehydes, ketones, alcohols, carboxylic acids, glycerides with at least 8 carbon atoms, preferably with at least 10 carbon atoms, wherein the hydrophobic compound is preferably selected from dodecanal, dodecane, glyceryl trioctonate or mixtures thereof. Regarding dodecane, the isomer n-dodecane is especially preferred.

### Encapsulated polyurethane polymerization catalysts:

The encapsulated polyurethane polymerization catalyst is preferably present in the form of particles, more preferably nanoparticles, wherein the particles have preferably an average particle size (d50) of 1 to 1,000 nm, more preferably 100 to 500 nm, even more preferably 200 to 400 nm, most preferably 230 to 350 nm, measured by Dynamic Light Scattering according to ISO 22412:2017.

In a preferred embodiment in step a2) or b2) the ionic surfactant is an anionic or cationic surfactant, wherein the particles have a zeta-potential of -100 to 0 mV if an anionic surfactant is used, preferably -70 to -10 mV, more preferably -50 to -15 mV, most preferably -40 to -20 mV, and wherein the particles have a zeta-potential of 0 to 100 mV if an cationic surfactant is used, preferably 20 to 80 mV, more preferably 30 to 70 mV, most preferably 40 to 60 mV, the zeta-potential being measured according to ISO 13099-2:2012.

Furthermore it is preferred that in variant a), when in step a2) no ionic surfactant is used and the non-ionic surfactant comprises polyoxyethylenesorbitan monooleate, preferably a poloxamer and a polyoxyethylenesorbitan monooleate, the particles have a zeta-potential of -100 to 0 mV, preferably -70 to -5 mV, more preferably -50 to -10 mV, even more preferably -15 to 30 mV, the zeta-potential being measured according to ISO 13099-2:2012.

The encapsulated polyurethane polymerization catalyst preferably has a core-shell structure, wherein the shell comprises or consists of the encapsulation polymer having a melting point of from 40 to 130 °C, determined by Differential Scanning Calorimetry (DSC), and wherein the core comprises or consists of the polyurethane polymerization metal catalyst, the surfactant and the hydrophobic compound. This is to be understood that these components, especially the surfactant, can also be adsorbed at the surface of the polymer.

In a further preferred embodiment of the invention, the encapsulated polyurethane polymerization catalyst is present in the form of nanocapsules and/or nanospheres.

The inventive encapsulated polyurethane polymerization catalyst can be used in latent reactive polyurethane compositions, especially in latent reactive polyurethane coating or adhesive compositions.

### Latent reactive polyurethane composition:

The inventive encapsulated polyurethane polymerization catalysts represent valuable starting materials for the formulation of latent reactive polyurethane compositions.

The present invention therefore further relates to latent reactive polyurethane compositions comprising the components:
A) a polyol,
B) a polyisocyanate,
C) the encapsulated polyurethane polymerization catalyst described above, and
D) optionally auxiliary and additional compounds.

Suitable polyol components A) to be used in the inventive latent reactive polyurethane compositions are any desired polyols which carry at least two hydroxyl groups, for example, the customary polyhydroxyl compounds that are known from polyurethane chemistry, such as, for example, polyester polyols, polyether polyols, polycarbonate polyols, polyacrylate polyols and/or any desired blends of such polyols.

Suitable polyester polyols are, for example, those with an average molecular weight, calculable from functionality and hydroxyl number, of 200 to 3000, preferably of 250 to 2500, having a hydroxyl group content of 1 to 21 wt.-%, preferably 2 to 18 wt.-%, of the kind preparable in a manner known per se by reaction of polyhydric alcohols with deficit amounts of polybasic carboxylic acids, corresponding carboxylic anhydrides, corresponding polycarboxylic esters of lower alcohols, or lactones.

Polyhydric alcohols suitable for preparing these polyester polyols are, in particular, those of the molecular weight range 62 to 400, such as, for example, 1,2-ethanediol, 1,2- and 1,3-propanediol, the isomeric butanediols, pentanediols, hexanediols, heptanediols and octanediols, 1,2- and 1,4-cyclohexanediol, 1,4-cyclohexanedimethanol, 4,4'-(1-methylethylidene)biscyclohexanol, 1,2,3-propanetriol, 1,1,1 -trimethylolethane, 1,2,6-hexanetriol, 1,1,1 -trimethylolpropane, 2,2-bis(hydroxymethyl)-1,3-propanediol or 1,3,5 -tri s(2-hydroxyethyl)isocyanurate.

The acids or acid derivatives used for preparing the polyester polyols may be aliphatic, cycloaliphatic and/or heteroaromatic in nature and may optionally be substituted, by halogen atoms, for example, and/or unsaturated. Examples of suitable acids are, for example, polybasic carboxylic acids of the molecular weight range 118 to 300 or derivatives thereof such as, for example, succinic acid, adipic acid, sebacic acid, phthalic acid, isophthalic acid, trimellitic acid, phthalic anhydride, tetrahydrophthalic acid, maleic acid, maleic anhydride, dimeric and trimeric fatty acids, dimethyl terephthalate and bisglycol terephthalate.

For preparing the polyester polyols it is also possible to use any desired mixtures of these exemplified starting compounds.

Suitable polyester polyols are also those of the kind preparable in a conventional way from lactones and simple polyhydric alcohols, such as those exemplified above, for example, as starter molecules, with ring opening. Examples of suitable lactones for preparing these polyester polyols are □-propiolactone, □-butyrolactone, □- und □-valerolactone, □-caprolactone, 3,5,5- and 3,3,5-trimethylcaprolactone or any desired mixtures of such lactones. The preparation of these lactone polyesters is accomplished generally in the presence of catalysts, for example Lewis or Bronsted acids, organotin or organotitanium compounds, at temperatures of 20 to 200°C, preferably 50 to 160°C.

Suitable polyether polyols are, for example, those of an average molecular weight, calculable from functionality and hydroxyl number, of 200 to 6000, preferably 250 to 4000, having a hydroxyl group content of 0.6 to 34 wt %, preferably 1 to 27 wt %, of the kind obtainable conventionally by alkoxylation of suitable starter molecules.

To prepare these polyether polyols it is possible to use as starter molecules any desired polyhydric alcohols, examples being those from the molecular weight range of 62 to 400, of the kind described above with regard to the preparation of polyester polyols.

Alkylene oxides suitable for the alkoxylation reaction are especially ethylene oxide and propylene oxide, which can be used in the alkoxylation reaction in any sequence or else in a mixture.

Suitable polyacrylate poylols are, for example, those of an average molecular weight, calculable from functionality and hydroxyl number or determinable by gel permeation chromatography (GPC) of 800 to 50 000, preferably of 1000 to 20 000, having a hydroxyl group content of 0.1 to 12 wt %, preferably 1 to 10, of the kind preparable in a conventional way by copolymerization of olefinically unsaturated monomers containing hydroxyl groups with hydroxyl-group-free olefinic monomers.

Examples of suitable monomers for preparing the polyacrylate polyols are vinyl and vinylidene monomers such as, for example, styrene, □-methylstyrene, o- and/or p-chlorostyrene, o-, m- or p-methylstyrene, p-tert-butylstyrene, acrylic acid, acrylonitrile, methacrylonitrile, acrylic and methacrylic esters of alcohols having up to 18 carbon atoms, such as methyl acrylate, ethyl acrylate, n-propyl acrylate, isopropyl acrylate, n-butyl acrylate, isobutyl acrylate, tert-butyl acrylate, amyl acrylate, hexyl acrylate, 2-ethylhexyl acrylate, isooctyl acrylate, 3,3,5-trimethylhexyl acrylate, stearyl acrylate, lauryl acrylate, cyclopentyl acrylate, cyclohexyl acrylate, 4-tert-butylcyclohexyl acrylate, isobornyl acrylate, methyl methacrylate, ethyl methacrylate, n-propyl methacrylate, isopropyl methacrylate, butyl methacrylate, isobutyl methacrylate, tert-butyl methacrylate, amyl methacrylate, hexyl methacrylate, 2-ethylhexyl methacrylate, isooctyl methacrylate, 3,3,5-trimethylhexyl methacrylate, stearyl methacrylate, lauryl methacrylate, cyclopentyl methacrylate, cyclohexyl methacrylate, 4-tert-butylcyclohexyl methacrylate, norbornyl methacrylate or isobornyl methacrylate, diesters of fumaric acid, itaconic acid or maleic acid with alcohols having 4 to 8 carbon atoms, acrylamide, methacrylamide, vinyl esters of alkanemonocarboxylic acids having 2 to 5 carbon atoms, such as vinyl acetate or vinyl propionate, hydroxyalkyl esters of acrylic acid or methacrylic acid having 2 to 5 carbon atoms in the hydroxyalkyl radical, such as 2-hydroxyethyl, 2-hydroxypropyl, 3-hydroxypropyl, 3-hydroxybutyl, 4-hydroxybutyl, trimethylolpropane monoacrylate or monomethacrylate or pentaerythritol monoacrylate or monomethacrylate, and also any desired mixtures of such exemplified monomers.

Preferred polyol components are polyester polyols and/or polyacrylate polyols of the type stated. Particularly preferred polyol components are polyacrylate polyols of the type stated, which may optionally be used in a mixture with polyester polyols and/or polycarbonate polyols of the type stated.

With very particular preference the binder components contain exclusively polyacrylate polyols of the type stated.

Suitable polyisocyanate components B) to be used in the inventive latent reactive polyurethane compositions are any desired polyisocyanates which carry at least two aliphatically, cycloaliphatically, araliphatically and/or aromatically bonded isocyanate groups.

Suitable polyisocyanate components are in particular, the known paint isocyanates with uretdione, isocyanurate, iminooxadiazinedione, urethane, allophanate, biuret and/or oxadiazinetrione structure, which can be made by modification from diisocyanates, as described by way of example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 or in EP-A 0 336 205, EP-A 0 339 396, EP-A 0 798 299, EP-A 0 986 009, EP-A 0 962 454, EP-A 0 962 455, EP-A 2 785 760, EP-A 2 883 895, EP-A 3 107 922, EP-A 3 107 948 and EP-A 3 337 836.

Suitable diisocyanates for the preparation of these paint isocyanates can be prepared by any desired processes, for example by phosgenation of the corresponding diamines or by a phosgene-free route, for example by urethane cleavage. Suitable diisocyanates are, for example, 1,4-diisocyanatobutane, 1,5-diisocyanatopentane (PDI), 1,6-diisocyanatohexane (HDI), 1,5-diisocyanato-2,2-dimethylpentane, 2,2,4- and/or 2,4,4-trimethyl-1,6-diisocyanatohexane, 1,8-diisocyanatooctane, 1,9-diisocyanatononane, 1,10-diisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12-MDI), 1,3- and 1,4-bis(isocyanatomethyl)cyclohexane, 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane, 1,3-dimethyl-5,7-diisocyanatoadamantane, 1,3- and 1,4-bis-(isocyanatomethyl)benzene, 1,3- and 1,4-bis(1-isocyanato-1-methylethyl)benzene (TMXDI), bis(4-(1-isocyanato-1-methylethyl)phenyl) carbonate, 1,3- and 1,4-phenylene diisocyanate, 2,4- and 2,6-tolylene diisocyanate, and any desired mixtures of these isomers, diphenylmethane 2,4'- and/or -4,4'-diisocyanate and naphthylene 1,5-diisocyanate, and any desired mixtures of such diisocyanates. Further diisocyanates which are likewise suitable are found, furthermore, for example, in Justus Liebigs Annalen der Chemie Volume 562 (1949) pp. 75 - 136.

Preferred polyisocyanates for the formulation of the inventive latent reactive polyurethane compositions are those of the type stated having exclusively aliphatically and/or cycloaliphatically bonded isocyanate groups, more particularly those based on PDI, HDI and/or IPDI.

In the latent reactive polyurethane compositions of the invention the polyols A) and the polyisocyanates B) are used in such amounts that for each isocyanate group of the component B) there are 0.5 to 3, preferably 0.6 to 2.0, more preferably 0.8 to 1.6 hydroxyl groups of the polyol A).

Beside the encapsulated polyurethane polymerization catalyst C) described above, the inventive latent reactive polyurethane compositions may optionally comprise further auxiliary and additional compounds D).

These are, in particular, the auxiliaries and additives known to the skilled person from coatings technology, such as, for example, solvents, UV stabilizers, antioxidants, water scavengers, flow control agents, rheological additives, slip additives, defoamers, fillers and/or pigments.

In order to reduce the processing viscosity, the latent reactive polyurethane compositions of the invention may be diluted with customary organic solvents, for example. Suitable solvents are, for example, the customary paint solvents that are known per se such as ethyl acetate, butyl acetate, ethylene glycol monomethyl or monoethyl ether acetate, 1-methoxyprop-2-yl acetate (MPA), 3-methoxy-n-butyl acetate, acetone, 2-butanone, 4-methyl-2-pentanone, cyclohexanone, toluene, xylene, chlorobenzene, white spirit, more highly substituted aromatics, of the kind available commercially, for example, under the names Solventnaphtha, Solvesso^{®}, Isopar^{®}, Nappar^{®}, Varsol^{®} (ExxonMobil Chemical Central Europe, Cologne, DE) and Shellsol^{®} (Shell Deutschland Oil GmbH, Hamburg, DE), and also solvents such as propylene glycol diacetate, diethylene glycol dimethyl ether, dipropylene glycol dimethyl ether, diethylene glycol ethyl and butyl ether acetate, N-methylpyrrolidone and N-methylcaprolactam, or any desired mixtures of such solvents.

Suitable UV stabilizers may preferably be selected from the group consisting of piperidine derivatives, for example 4-benzoyloxy-2,2,6,6-tetramethylpiperidine, 4-benzoyloxy-1,2,2,6,6-pentamethylpiperidine, bis(2,2,6,6-tetramethyl-4-piperidyl) sebacate, bis(1,2,2,6,6-pentamethyl-1-4-piperidinyl) sebacate, bis(2,2,6,6-tetramethyl-4-piperidyl) suberate, bis(2,2,6,6-tetramethyl-4-piperidyl) dodecanedioate; benzophenone derivatives, for example 2,4-dihydroxy-, 2-hydroxy-4-methoxy-, 2-hydroxy-4-octoxy-, 2-hydroxy-4-dodecyloxy- or 2,2'-dihydroxy-4-dodecyloxybenzophenone; benzotriazole derivatives, for example 2-(2H-benzotriazol-2-yl)-4,6-di-tert-pentylphenol, 2-(2H-benzotriazol-2-yl)-6-dodecyl-4-methylphenol, 2-(2H-benzotriazol-2-yl)-4,6-bis(1-methyl-1-phenylethyl)phenol, 2-(5-chloro -2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-benzotriazol-2-yl)-6-(1-methyl-1-phenylethyl)-4-(1,1,3,3 -tetramethylbutyl)phenol, isooctyl 3-(3-(2H-benzotriazol-2-yl)-5-(1,1-dimethylethyl)-4-hydroxyphenylpropionate), 2-(2H-benzotriazol-2-yl)-4,6-bis (1,1-dimethylethyl)phenol, 2-(2H-benzotriazol-2-yl)-4,6-bis (1-methyl-1-phenylethyl)phenol, 2-(5-chloro-2H-benzotriazol-2-yl)-4,6-bis (1,1-dimethylethyl)phenol; oxalanilides, for example 2-ethyl-2'-ethoxy- or 4-methyl-4'-methoxyoxalanilide; salicylic esters, for example phenyl salicylate, 4-tert-butylphenyl salicylate, 4-tert-octylphenyl salicylate; cinnamic ester derivatives, for example methyl □-cyano-3-methyl-4-methoxycinnamate, butyl □-cyano-3-methyl-4-methoxycinnamate, ethyl □-cyano-β-phenylcinnamate, isooctyl a-cyano-β-phenylcinnamate; and malonic ester derivatives, such as dimethyl 4-methoxybenzylidenemalonate, diethyl 4-methoxybenzylidenemalonate, dimethyl 4 butoxybenzylidenemalonate. These preferred UV stabilizers may be employed either singly or in any desired combinations with one another.

Suitable antioxidants which may optianally be used in the latent reactive polyurethane compositions are preferably sterically hindered phenols, which may be selected preferably from the group consisting of 2,6-di-tert-butyl-4-methylphenol (ionol), pentaerythritol tetrakis(3-(3,5-di-tert-butyl-4-hydroxy-phenyl)propionate), octadecyl 3-(3,5-di-tert-butyl-4-hydroxyphenyl)propionate, triethylene glycol bis(3-tert-butyl-4-hydroxy-5-methylphenyl)propionate, 2,2'-thiobis(4-methyl-6-tertbutylphenol) and 2,2'-thiodiethyl bis[3-(3,5-di-tert-butyl-4-hydroxyphenyl)propionate]. These may be used either individually or in any desired combinations with one another as required.

In order to improve the substrate wetting, the latent reactive polyurethane compositions of the invention may optionally comprise suitable flow control agents, examples being organically modified siloxanes, such as polyether-modified siloxanes, polyacrylates and/or fluorosurfactants.

The rheological additives, slip additives, defoamers, fillers and/or pigments which are likewise optionally present in the latent reactive polyurethane compositions of the invention as further auxiliaries and additives D) are known to the skilled person and are employed, if at all, in amounts customary within coatings technology. A comprehensive overview of such suitable auxiliaries and additives is found for example in Bodo Muller, "Additive kompakt", Vincentz Network GmbH & Co KG (2009).

The latent reactive polyurethane compositions of the invention are preferably used for the production of coatings or adhesive layers and may be applied by methods known per se, as for example by spraying, spreading, dipping, flow-coating, or with the aid of rollers or knife coaters, in one or more layers.

Substrates contemplated here are any desired substrates, such as metal, wood, glass, stone, ceramic materials, concrete, rigid and flexible plastics, textiles, leather and paper, which prior to coating may optionally also be provided with customary primers, known priming systems, surfacer coatings, basecoat systems and/or clearcoat systems.

The above described latent reactive polyurethane compostion can be used in a method for the production of a polyurethane coating or adhesive. In this method a polyurethane coating or adhesive is produced by heating the inventive latent reactive polyurethane composition to at least the melting point of the encapsulation polymer to release the polyurethane polymerization metal catalyst from the encapsulated polyurethane polymerization catalyst and reacting the components of the latent reactive polyurethane composition to form the polyurethane coating or adhesive. The inventive latent reactive polyurethane composition is heated to at least the melting point of the encapsulation polymer, but can also be heated to higher temperatures as needed, for example to a common curing temperature.

Hence, the inventive latent reactive polyurethane composition can be used for producing polyurethanes, especially polyurethane coatings or adhesives.

In addition, the invention also related to a method for producing a coated substrate. The method comprises the steps:
- Applying the inventive latent reactive polyurethane composition onto a substrate, preferably metal, wood, glass, stone, ceramic materials, concrete, hard and flexible plastics, textiles, leather and paper, which can optionally also be coated with conventional primers before coating.
- Heating the latent reactive polyurethane composition to at least the melting point of the encapsulation polymer to release the polyurethane polymerization metal catalyst from the encapsulated polyurethane polymerization catalyst and reacting the components of the latent reactive polyurethane composition to form the coated substrate.

In this method the heating can also be performed at higher temperatures as needed, for example to a common curing temperature.

### EMOBDIMENTS:

The present invention relates especially to the following embodiments:
According to a first embodiment, the invention relates to a method for producing an encapsulated polyurethane polymerization catalyst, wherein the method comprises in a variant a) the steps of
a1) Preparing a mixture comprising a solvent, an encapsulation polymer having a melting point of from 40 to 130 °C, determined by Differential Scanning Calorimetry (DSC), a polyurethane polymerization metal catalyst and a hydrophobic compound;
a2) Adding the mixture of step a1) to an aqueous solution comprising water, a non-ionic surfactant and/or an ionic surfactant to form a suspension containing the encapsulated polyurethane polymerization catalyst;
or according to a variant b), the method comprises the steps of
b1) Preparing an organic phase comprising or consisting of a water-saturated solvent solution comprising an encapsulation polymer having a melting point of from 40 to 130 °C, determined by Differential Scanning Calorimetry (DSC), a polyurethane polymerization metal catalyst and a hydrophobic compound;
b2) Preparing an aqueous phase comprising or consisting of a solvent-saturated water solution comprising a non-ionic and an ionic surfactant;
b3) Mixing the organic phase of step b1) with the aqueous phase of step b2), in particular adding the organic phase of step b1) to the aqueous phase of step b2), and emulsifying the phases to form an emulsion;
b4) Adding water to the emulsion of step b3) to form a suspension containing the encapsulated polyurethane polymerization catalyst,
wherein the hydrophobic compound in variant a) and variant b) is liquid at 25 °C and has a water miscibility at 25 °C of 5 mg/L or less and wherein in variant a)
- the hydrophobic compound is not an ester of glycerol if the aqueous solution does not comprise an ionic surfactant; and
- if no ionic surfactant is used in step a2), the non-ionic surfactant comprises a polyoxyethylenesorbitan monooleate.

According to a second embodiment, the invention relates to a method according to embodiment 1, characterized in that the encapsulated polyurethane polymerization catalyst is present in the form of particles, preferably nanoparticles, wherein the particles have an average particle size (d50) of 1 to 1,000 nm, preferably 100 to 500 nm, more preferably 200 to 400 nm, most preferably 230 to 350 nm, measured by Dynamic Light Scattering according to ISO 22412:2017.

According to a third embodiment, the invention relates to a method according to embodiment 2, characterized in that in step a2) or b2) the ionic surfactant is an anionic or cationic surfactant, wherein the particles have a zeta-potential of -100 to 0 mV if an anionic surfactant is used, preferably -70 to -10 mV, more preferably -50 to -15 mV, most preferably -40 to -20 mV, and wherein the particles have a zeta-potential of 0 to 100 mV if an cationic surfactant is used, preferably 20 to 80 mV, more preferably 30 to 70 mV, most preferably 40 to 60 mV, the zeta-potential being measured according to ISO 13099-2:2012.

According to a fourth embodiment, the invention relates to a method according to any of the preceding embodiments, characterized in that in variant a), when in step a2) no ionic surfactant is used and the non-ionic surfactant comprises polyoxyethylenesorbitan monooleate, preferably a poloxamer and a polyoxyethylenesorbitan monooleate, the particles have a zeta-potential of -100 to 0 mV, preferably -70 to -5 mV, more preferably -50 to -10 mV, even more preferably -15 to 30 mV, the zeta-potential being measured according to ISO 13099-2:2012.

According to a fifth embodiment, the invention relates to a method according to any of the preceding embodiments, characterized in that the encapsulated polyurethane polymerization catalyst has a core-shell structure, wherein the shell comprises or consists of the encapsulation polymer and wherein the core comprises or consists of the polyurethane polymerization metal catalyst, the surfactant and the hydrophobic compound.

According to a sixth embodiment, the invention relates to a method according to any of the preceding embodiments, characterized in that the encapsulated polyurethane polymerization catalyst is present in the form of nanocapsules and/or nanospheres.

According to a seventh embodiment, the invention relates to a method according to any of the preceding embodiments, characterized in that the encapsulation polymer has a melting point of from 40 to 120 °C, preferably of from 45 to 80 °C, more preferably of from 50 to 70 °C.

According to an eighth embodiment, the invention relates to a method according to any of the preceding embodiments, characterized in that the encapsulation polymer is selected from the group comprising or consisting of polycaprolactones, polycaprolactone-polylactic acid co-polymers, polyethylene glycol, polycarpolactone-poly(glycolide-co-L-lactide) co-polymers, or mixtures thereof.

According to a ninth embodiment, the invention relates to a method according to any of the preceding embodiments, characterized in that the polyurethane polymerization metal catalyst is selected from the group comprising or consisting of metal salts, preferably metal carboxylates, more preferably zinc bis(2-ethylhexanoate), bismuth tri(2-ethylhexanoate), or mixtures thereof.

According to a tenth embodiment, the invention relates to a method according to any of the preceding embodiments, characterized in that the non-ionic surfactant is selected from the group comprising or consisting of poloxamers and polyoxyethylenesorbitan monooleate, and/ or that the ionic surfactant is selected from sodium dodecyl sulfate, cetyltrimethylammonium bromide or mixtures thereof and/or in variant a) the non-ionic surfactant is a mixture of a poloxamer and polyoxyethylenesorbitan monooleate or a poloxamer and an ionic surfactant selected from sodium dodecyl sulfate, cetyltrimethylammonium bromide or mixtures thereof.

According to a eleventh embodiment, the invention relates to a method according to any of the embodiments 1 to 9, characterized in that in variant a) if no ionic surfactant is used in step a2), the non-ionic surfactant comprises a poloxamer and a polyoxyethylenesorbitan monooleate. According to a twelfth embodiment, the invention relates to a method according to any of the preceding embodiments, characterized in that in variant a) the hydrophobic compound is not an ester of glycerol if the aqueous solution does not comprise an ionic surfactant and comprises a polyoxyethylenesorbitan monooleate as non-ionic surfactant.

According to a thirteenth embodiment, the invention relates to a method according to any of the preceding embodiments, characterized in that the hydrophobic compound is selected from the group, comprising or consisting of alkanes, aldehydes, ketones, alcohols, carboxylic acids, glycerides with at least 8 carbon atoms, preferably with at least 10 carbon atoms, wherein the hydrophobic compound is preferably selected from dodecanal, dodecane, glyceryl trioctonate or mixtures thereof.

According to a fourteenth embodiment, the invention relates to a method according to any of the preceding embodiments, characterized in that the encapsulated polyurethane polymerization catalyst is separated from the suspension yielded in step a2) or b4), in particular by evaporation of the liquid phase and/or by freeze-drying.

According to a fifteenth embodiment, the invention relates to a method according to any of the preceding embodiments, characterized in that the solvent in step a1) is selected from the group comprising or consisting of acetone, ethanol, acetonitrile, dimethylformamide or mixtures thereof.

According to a sixteenth embodiment, the invention relates to a method according to any of the preceding embodiments, characterized in that the solvents of the solvent-saturated water solution and the water-saturated solvent solution in steps b1) and b2) are independently selected from the group comprising or consisting of ethyl acetate, methyl ethyl ketone, methyl acetate, butyl acetate, n-butanol or mixtures thereof, in particular ethyl acetate, methyl ethyl ketone or mixtures thereof, whereas the solvents of the solvent-saturated water solution and the water-saturated solvent solution in steps b1) and b2) are preferably the same.

According to a seventeenth embodiment, the invention relates to a method according to any of the embodiments 1 to 15, characterized in that in variant a) the ratio of the solvent to
- the encapsulation polymer is 0,01 to 1,5 (mL/mg), preferably 0,05 to 1,0 (mL/mg), more preferably 0,1 to 0,5 (mL/mg), even more preferably 0,15 to 0,25 (
- preferably 0,15 to 0,25 (mL/mg); and/or
- the hydrophobic compound is 0,01 to 1,0 (mL/mg), preferably 0, mL/mg);
- the polyurethane polymerization metal catalyst is 0,01 to 1,5 (mL/mg), preferably 0,05 to 1,0 (mL/mg), more preferably 0,1 to 0,5 (mL/mg), even more 035 to 0,75 (mL/mg), more preferably 0,05 to 0,5 (mL/mg), even more preferably 0,075 to 0,2 (mL/mg);
and/or the aqueous solution contains 0,1 to 2,0 wt.-%, preferably 0,25 to 1,5 wt.-%, more preferably 0,5 to 1,0 wt.-% of the non-ionic surfactant and/or the ionic-surfactant, based on the weight of the aqueous solution.

According to an eighteenth embodiment, the invention relates to a method according to embodiment 17, characterized in that in variant a), step a2) the ratio of the mixture of step a1) to the aqueous solution is from 0,1 to 1,0, preferably 0,2 to 0,8, even more preferably 0,4 to 0,7.

According to a nineteenth embodiment, the invention relates to a method according to any of the embodiments 1 to 16, characterized in that in variant b) in step b1) the ratio of the organic phase to
- the encapsulation polymer is 0,01 to 0,5 (mL/mg), preferably 0,02 to 0,3 (mL/mg), more preferably 0,03 to 0,2 (mL/mg), even more preferably 0,04 to 0,1 (mL/mg);
- the polyurethane polymerization metal catalyst is 0,01 to 0,5 (mL/mg), preferably 0,02 to 0,3 (mL/mg), more preferably 0,03 to 0,2 (mL/mg), even more preferably 0,04 to 0,1 (mL/mg); and/or
- the hydrophobic compound is 0,01 to 0,1 (mL/mg), preferably 0,015 to 0,08 (mL/mg), more preferably 0,02 to 0,07 (mL/mg), even more preferably 0,02 to 0,06 (mL/mg);
and/or in step b2) the aqueous phase contains 0,1 to 2,0 wt.-%, preferably 0,5 to 1,5 wt.-%, more preferably 0,75 to 1,25 wt.-% of the non-ionic surfactant and the ionic-surfactant, based on the weight of the aqueous phase.

According to a twentieth embodiment, the invention relates to a method according to embodiment 19, characterized in that in variant b), step b3) the ratio of the organic phase to the aqueous phase is from 0,05 to 0,5, preferably 0,1 to 0,4, even more preferably 0,2 to 0,3.

According to a twenty-first embodiment, the invention relates to a method according to embodiment 19 or 20, characterized in that in variant b), step b4) the ratio of the added water to the emulsion is 0,1 to 10,0, preferably 0,5 to 7,5, even more preferably 1,0 to 5,0.

According to a twenty-second embodiment, the invention relates to an encapsulated polyurethane polymerization catalyst obtained or obtainable by a method according to any of the embodiments 1 to 21.

According to a twenty-third embodiment, the invention relates to an encapsulated polyurethane polymerization catalyst having a core-shell structure, wherein the shell comprises or consists of an encapsulation polymer having a melting point of from 40 to 130 °C, determined by Differential Scanning Calorimetry (DSC), and wherein the core comprises or consists of a polyurethane polymerization metal catalyst, a non-ionic and/or an ionic surfactant and a hydrophobic compound.

According to a twenty-fourth embodiment, the invention relates to a use of the encapsulated polyurethane polymerization catalyst of embodiment 22 or 23 in latent reactive polyurethane compositions, especially in latent reactive polyurethane coating or adhesive compositions.

According to a twenty-fifth embodiment, the invention relates to a latent reactive polyurethane composition comprising the components:
A) a polyol,
B) a polyisocyanate,
C) the encapsulated polyurethane polymerization catalyst according to embodiment 22 or 23, and
D) optionally auxiliary and additional compounds.

According to a twenty-sixth embodiment, the invention relates to a method for the production of a polyurethane coating or adhesive from the latent reactive polyurethane composition of embodiment 25 by heating the latent reactive polyurethane composition to at least the melting point of the encapsulation polymer to release the polyurethane polymerization metal catalyst from the encapsulated polyurethane polymerization catalyst and reacting the components of the latent reactive polyurethane composition to form the polyurethane coating or adhesive.

According to a twenty-seventh embodiment, the invention relates to a use of the latent reactive polyurethane composition according to embodiment 25 for producing polyurethanes, especially polyurethane coatings or adhesives.

According to a twenty-eighth embodiment, the invention relates to a method for producing a coated substrate, comprising the steps:
- Applying a latent reactive polyurethane composition according to claim 25 onto a substrate, preferably metal, wood, glass, stone, ceramic materials, concrete, hard and flexible plastics, textiles, leather and paper, which can optionally also be coated with conventional primers before coating.
- Heating the latent reactive polyurethane composition to at least the melting point of the encapsulation polymer to release the polyurethane polymerization metal catalyst from the encapsulated polyurethane polymerization catalyst and reacting the components of the latent reactive polyurethane composition to form the coated substrate.

### Examples:

The present invention is discussed below with reference to examples, but is not limited thereto.

### Used materials:

Encapsulation Polymers:
- poly(ε-caprolactone) (Mn = 10 kDa; Sigma Aldrich; melting point (DSC): 65,45 °C)
- poly(ε-caprolactone) (Mn = 45 kDa; Sigma Aldrich; melting point (DSC): 65,22°C)
- poly(ε-caprolactone) (Mn = 80 kDa; Sigma Aldrich; melting point (DSC): 62,85 °C)

Non-ionic surfactants:
- Pluronic^{®} F-68 (triblock copolymer poly(ethylene glycol)-poly(propylene glycol)-poly(ethylene glycol); Mw = 8.4 kDa; Sigma Aldrich)
- Pluronic^{®} L-35 (triblock copolymer poly(ethylene glycol)-poly(propylene glycol)-poly(ethylene glycol) (Mw = 1.9 kDa; Sigma Aldrich)
- Tween^{®} 80 (polyoxyethylenesorbitan monooleate; Sigma Aldrich)

Ionic surfactants:
- CTAB (cetyltrimethylammonium bromide; > 98%; Sigma Aldrich)
- SDS (sodium dodecyl sulfate; > 99%; Sigma Aldrich)

Hydrophobic compound:
- n-dodecane (> 99%; Sigma Aldrich)
- GTO (glyceryl trioctanate; > 99%; Sigma Aldrich)
- dodecanal (> 95%; Alfa Aesar)

Catalyst:
- Borchi^{®} Kat 22 (Zinc bis(2-ethylhexanoate); 21.8 to 22.6 % zinc content; Borchers)
- Borchi^{®} Kat 24 (Bismuth tri(2-ethylhexanoate); 23 - 25 % bismuth content; 21.8 to 22.6 % zinc content; Borchers)

Solvents:
- Acetone (analytical grade)
- Ethyl acetate (analytical grade)
- Methyl ethyl ketone (analytical grade)
- Pure water (purified with Millipak^{®} filter)

### Used measuring methods:

- Particle size analysis:
   The particle size (PS) was measured by Dynamic Light Scattering (DLS) according to ISO 22412:2017 using a Zetasizer Nano ZS (Malvern Instruments). All samples (taken from the respective suspensions) were diluted (1:10, v/v) in water and analyzed in triplicate at 25°C. Particle size measurements were conducted in disposable polystyrene cells and the scattered light was collected at 173° via backscattering. All data were analyzed with the Zetasizer software.
- Zeta-potential measurement:
   The zeta-potential was measured by Electrophoretic Light Scattering according to ISO 13099-2:2012 using a Zetasizer Nano ZS (Malvern Instruments). All samples (taken from the respective suspensions) were diluted (1:10, v/v) in water and analyzed in triplicate at 25°C. Zeta potential measurements were performed in glass cells with a dip cell instrument (Zen 1002, Malvern Panalytical) made of palladium electrodes. All data were analyzed with the Zetasizer software.
- Morphology:
   Transmission Electron Microscopy (TEM; JEM-1011, Jeol) was used to study the morphology of the particles in suspension. One drop of sample was placed on a copper grid and the excess was removed with filter paper. The grid was let to dry overnight. Field Emission Scanning Electron Microscopy (FESEM; Scios2, Thermo Fischer Scientific) was also used to observe the particles suspension, as well as the dried particles after freeze-drying. One drop of liquid sample was placed on an aluminum or silica support and let to dry overnight; solids samples were deposited on a carbon adhesive tape. Samples were observed at an accelerated voltage of 5 kV.
- Encapsulation efficiency and metal content:
   Field Emission Scanning Electron Microscopy with Energy Dispersive X-Ray (FESEM-EDX; Scios2, Thermo Fischer Scientific) was used to detect metals inside the nanoparticles and in solution in order to determine if the encapsulation has been completed successfully. One drop of the respective suspension was placed on an aluminium or a silica support and let to dry overnight. X-Ray microanalyses were performed at an accelerated voltage of 15 kV. Peaks were automatically assigned by the Pathfinder X-Ray Microanalysis Software (Thermo Fischer Scientific). No peak assignments were deleted, added or modified, unless told otherwise. Each samples were analyzed in duplicate and at two different spots in the same sample.
- Thermal analyses/Melting Point ("experimental" melting point):
   The thermal properties of dried nanoparticles and the melting point of the encapsulation polymer having a melting point of from 40 to 130 °C were determined by Differential Scanning Calorimetry (DSC; DSC821e, Mettler Toledo). Samples of 3 mg were weighed directly in an aluminum pierced pan on an analytical balance. The pan was heated under nitrogen atmosphere (rate: 55 ml/min.) from 30°C to 300°C at a 10°C/min rate. This method for determining the melting point corresponds to the method mentioned above. This method for determining the melting point was used for all encapsulation polymers mentioned above and which are used in the following examples.

### Synthesis of the polymeric nanoparticle composition:

### Variant a): (Nanoprecipitation (or Solvent Displacement) method)

First, the encapsulation polymer was dissolved in acetone (10 mL) at 50°C under moderate stirring. The polyurethane polymerization metal catalyst and the hydrophobic compound were added subsequently. This mixture was slowly added to a water solution (20 mL) containing the respective surfactants indicated in Table 1. The obtained suspension containing the encapsulated polyurethane polymerization catalyst was stirred 10 minutes, filtered and the solvent was allowed to evaporate overnight at room temperature. Finally, the suspension was freeze-dried (LyoAlpha, Telstar) for 3 days without further purification. The quantities used in each case as well as the results are shown in Table 1.

### Variant b): (Emulsion-Solvent Diffusion method)

Water and ethyl acetate (EA) or methyl ethyl ketone (MEK) were mixed in large amounts to prepare two saturated solutions: water-saturated solvent (Ws-EA or Ws-MEK respectively), which forms the organic phase, and solvent-saturated water (EAs-water or MEKs-water respectively ), which forms the aqueous phase. At 20°C, water is saturated with 8.7 % and 24.0 % of EA and MEK respectively , whereas EA and MEK are saturated with 3.3 %and 10.0 % of water respectively. The encapsulation polymer was dissolved in the organic phase (10 mL) at 50°C, the polyurethane polymerization metal catalyst and the hydrophobic compound were added subsequently. The organic phase was added to the aqueous phase (40 mL) containing the respective surfactants indicated in Table 1. The mixture was emulsified with a high-speed mixer (Ultra-Turrax T25, IKA) at 10000 rpm during 10 minutes to form an emulsion. Large amount of pure water (200 mL when EA was used, 100 mL when MEK was used) was then added to the emulsion to displace the equilibrium and form a suspension containing the encapsulated polyurethane polymerization catalyst. The suspension containing the encapsulated polyurethane polymerization catalyst was mixed under moderate stirring for 30 minutes, followed by removal of the solvent and part of the water under vacuum (40 °C water bath, 100-150 mbar). The suspension containing the encapsulated polyurethane polymerization catalyst was let overnight and freeze-dried (LyoQuest, Telstar) for 5 days without further purification. The quantities used in each case as well as the results are shown in Table 2.

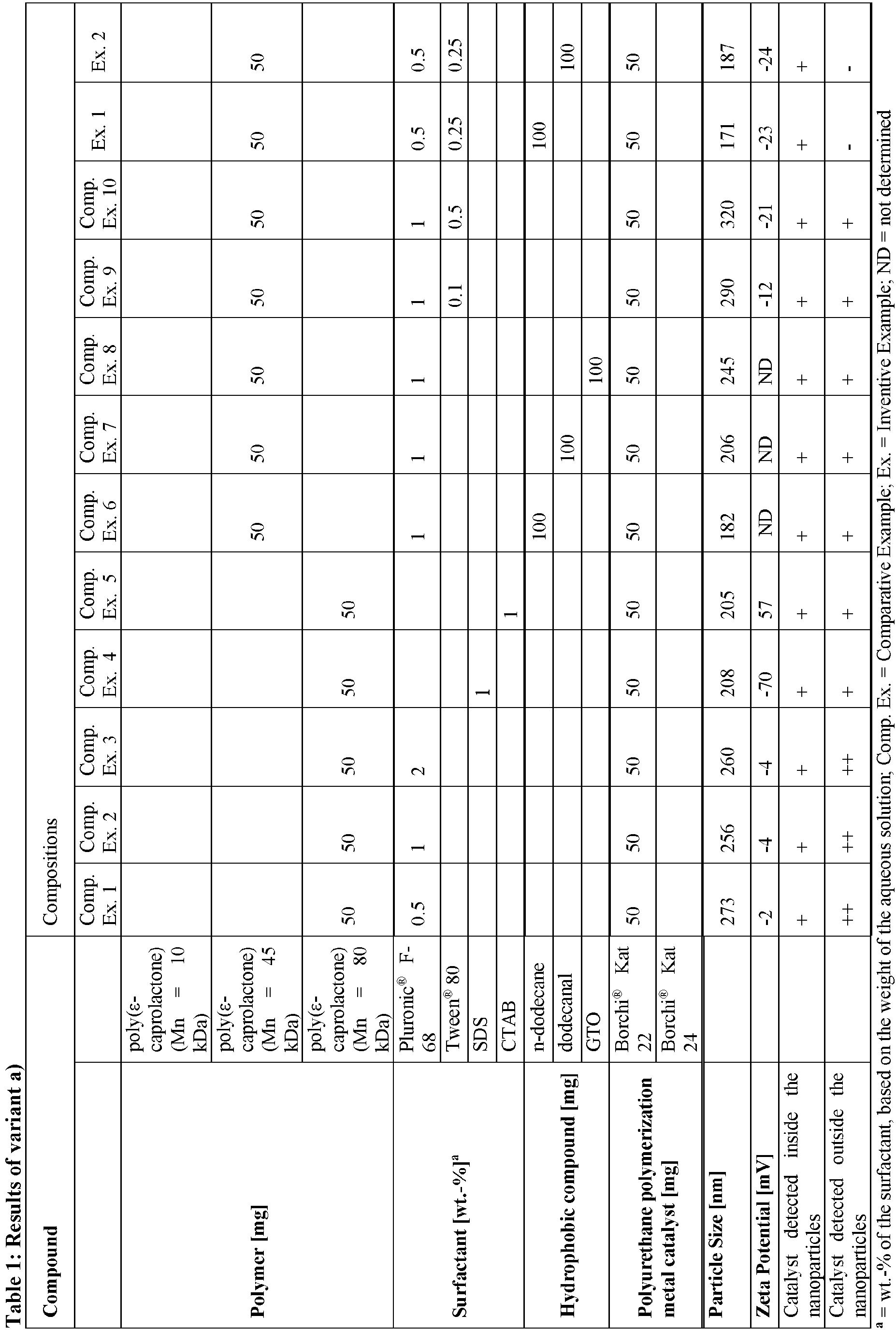

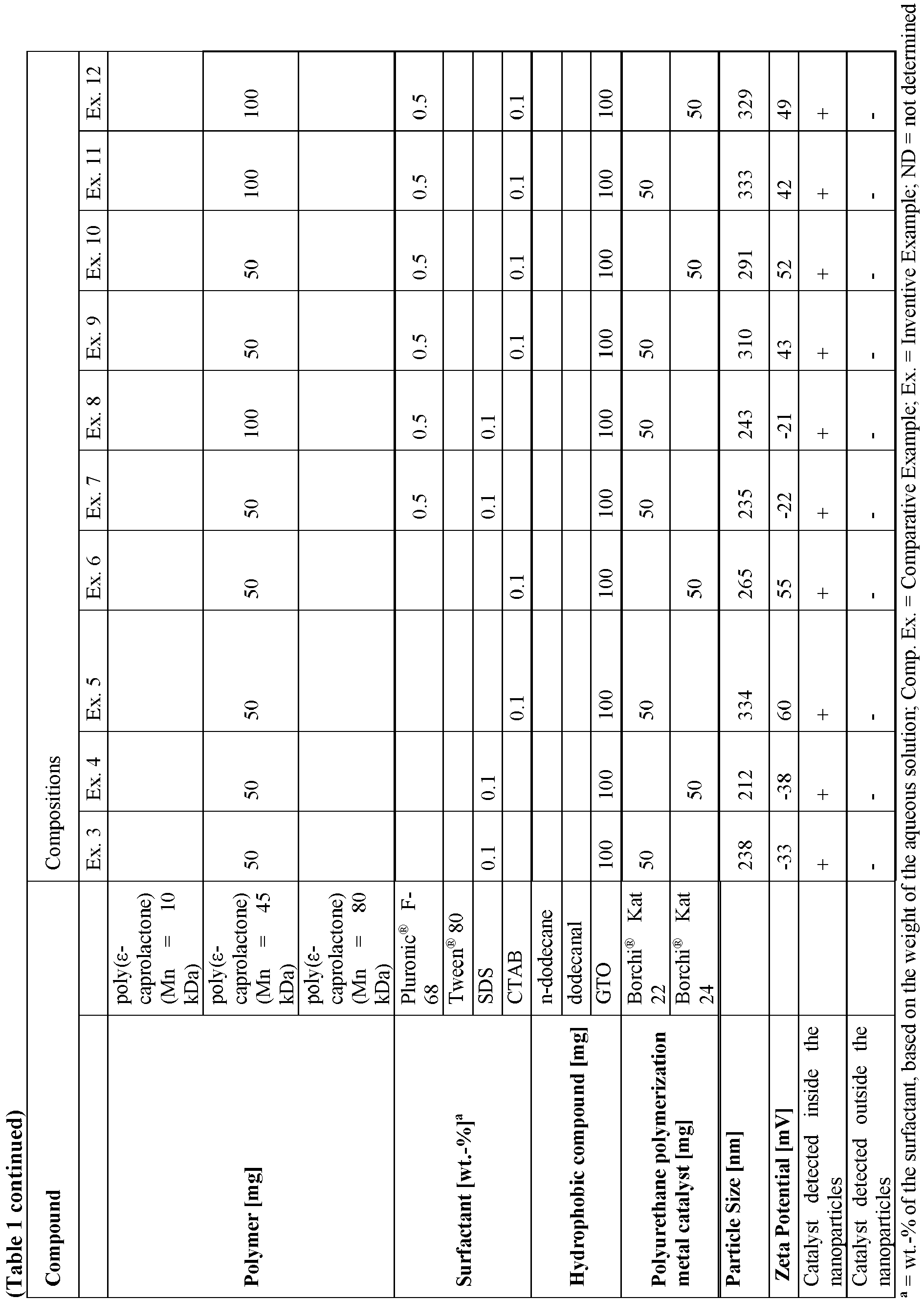

**Table 2: Results of Variant b)**

| **Compound** | | | | Compositions | | | | | | | | | |
|---|---|---|---|---|---|---|---|---|---|---|---|---|---|
| | | Comp. Ex. 11 | Comp. Ex. 12 | Comp. Ex. 13 | Comp. Ex. 14 | Comp. Ex. 15 | Comp. Ex. 16 | Comp. Ex. 17 | Comp. Ex. 18 | Comp. Ex. 19 | Ex. 13 | Ex. 14 | Ex. 15 |
| **Polymer [mg]** | poly(ε-caprolactone) (Mn = 80 kDa) | 200 | 200 | 400 | 200 | 200 | 200 | 200 | 200 | 200 | 200 | 200 | 200 |
| **Solvent** | | EA | EA | EA | EA | EA | EA | EA | MEK | EA | EA | EA | MEK |
| **Surfactant [wt.-%]^{a}** | Pluronic^{®} F-68 | 1 | 2 | 1 | 1 | 1 | 1 | 1 | 1 | 1 | 1 | 1 | 1 |
| | CTAB | | | | | | | | | 0.1 | 0.1 | 0.1 | 0.1 |
| **Hydrophobic compound** | n-dodecane | | | | 400 | | | | | | | | |
| | dodecanal | | | | | 400 | | | | | | | |
| | GTO | | | | | | 200 | 400 | | | 200 | 400 | 400 |
| **Polyurethane polymerization metal catalyst** | Borchi Kat 22 | 200 | 200 | 200 | 200 | 200 | 200 | 200 | 200 | 200 | 200 | 200 | 200 |
| **Particle Size [nm]** | | 201 | 208 | 266 | 280 | 231 | 249 | 287 | 142 | 199 | 236 | 284 | 185 |
| **Zeta Potential [mV]** | | ND | ND | ND | ND | ND | ND | ND | ND | 41 | 43 | 37 | 36 |
| Catalyst detected inside the nanoparticles | | + | + | + | + | + | + | + | + | + | + | + | + |
| Catalyst detected outside the nanoparticles | | ++ | ++ | ++ | + | + | + | + | ++ | + | - | - | - |

| | | | | | | | | | | | | | |
|---|---|---|---|---|---|---|---|---|---|---|---|---|---|
| ^{a} = wt.-% of the surfactant, based on the weight of the aqueous phase; Comp. Ex. = Comparative Example; Ex. = Inventive Example; EA = Ethyl Acetate; MEK= Methyl Ethyl Ketone; ND = not determined | | | | | | | | | | | | | |

### Results of table 1 (variant a)):

Comp. Examples 1 to 3 show that the encapsulation of a polyurethane polymerization metal catalyst in the form of nanoparticles is possible using solely a non-ionic surfactant. However, a significant amount of catalyst is detected outside of the nanoparticles, meaning this amount is not encapsulated. Such nanoparticles could not be used for two-component coating formulations.

Comp. Example 4 and 5 show that the encapsulation efficiency can be improved when using an ionic surfactant, such as SDS or CTAB, instead of a non-ionic surfactant. Slight amounts of catalyst are also detected outside of the nanoparticles, which means they are not suitable for this application.

Comp. Example 6 to 8 illustrates the use of a hydrophobic compound. These experiments show an improved encapsulation efficiency compared to Comp. Examples 1 to 3, but there is still a part of non-encapsulated catalyst. The results are independent of the hydrophobic compound used.

Comp. Example 9 and 10 demonstrate that the use of two non-ionic surfactants can lead to improved nanoparticles in comparison with Comp. Examples 1 to 3.

Inventive Examples 1 to 6 illustrate that the combination of a hydrophobic compound and non-ionic surfactants comprising polyoxyethylenesorbitan monooleate (Example 1 and 2), a non-ionic surfactant as well as an ionic surfactant (Examples 7 to 12) or just an ionic surfactant (Examples 3 to 6) lead to the formation of nanoparticles with maximized encapsulation efficiency in which the catalyst is only detected inside the nanoparticles. Note that the catalyst nature (Borchi Kat 22, Borchi Kat 24) is not influencing the results.

### Results of table 2 (variant b)):

Comp. Examples 11 to 13 show successful encapsulation of polyurethane polymerization metal catalyst, but low encapsulation efficiency.

Comp. Examples 14 to 17 show that the use of a hydrophobic compound improves the encapsulation efficiency, however a slight amount of catalyst remains non-encapsulated. Similarly, Comp. Example 19 shows that the encapsulation efficiency can also be improved by using an ionic surfactant. Comp. Example 18 shows the feasibility of the synthesis using another solvent, however similar results are obtained and the nanoparticles are not suitable for two-component polyurethane formulations.

Finally, Inventive Examples 13 to 15 show that the polyurethane catalyst can be fully encapsulated when using a hydrophobic compound as well as a non-ionic and an ionic surfactant in combination, independently of the solvent used.

### Comparison of coating formulations:

A coating binder was formulated by mixing 100 PBW (PBW = parts by weight) of a solventborne hydroxyl-functional acrylic polyol (Setalux D A 665 BA, 65 % solution in butyl acetate, OH content 4,6 % on solid resin, Allnex) with 0,4 PBW of BYK 355 (Polyacrylate-based surface leveling agent, BYK-Chemie GmbH, Wesel, Germany) and 50 PBW of a 1 : 1 mixture of 1-methoxy-2-propyl acetate and butyl acetate. To this binder 33,7 PBW of an aliphatic HDI polyisocyanate (Desmodur N 3300, HDI trimer, NCO content 21,8 %, Covestro Deutschland AG, Leverkusen, Germany) were added and the mixture was stirred for 3-5 minutes at normal temperature to obtain the two-component coating.

One part of this coating was catalyzed by addition of 1,3 PBW of the encapsulated polyurethane polymerization catalyst of Example 7. The formulation was mixed 2 minutes with a IKA^{®} VORTEX Shaker Genius 3 at maximum power (Inventive Example 16). For comparison reasons, other parts of the coating were cured without any catalyst (Comparative Example 20) and with 1,9 PBW of a 10 % solution of Borchi Kat 22 (Zinc bis(2-ethylhexanoate); 21,8 to 22,6 % zinc content; Borchers) in a 1 : 1 mixture of 1-methoxy-2-propyl acetate and butyl acetate (Comparative Example 21). The curings were performed at 20 °C and 65 °C and monitored by isotherm coating Dynamic Mechanical Analysis (Dynamic Mechanical Analyzer Model Q800, TA Instruments Waters LLC 159 Lukens Drive New Castle, Delaware USA).

The Dynamic Mechanical Analysis ("DMA") is used to observe the cross-linking speed, i.e. the speed at which the coating hardens. The DMA results showed that, at 20°C, the coatings using the encapsulated polyurethane polymerization catalyst is cross-linked at a similar speed as the non-catalyzed system, whereas at 65°C, the nanoparticle coating hardens like the normally catalyzed system, thus showing the efficiency of such encapsulated polyurethane polymerization catalysts (see table 3).

**Table 3: Results of the Dynamic Mechanical Analysis**

| **Temperature (°C)** | **Cross-linking speed** | | |
|---|---|---|---|
| | **Comp. Ex. 20** (non-catalyzed system) | **Ex. 16** (encapsulated polyurethane polymerization catalyst system) | **Comp. Ex. 21** (normally catalyzed system) |
| 20 | 4.4 MPa/min. | 9.5 MPa/min. | 33.3 MPa/min. |
| 65 | 190.0 MPa/min. | 353.8 MPa/min. | 349.7 MPa/min. |

| | | | |
|---|---|---|---|
| Comp. Ex. = Comparative Example; Ex. = Inventive Example | | | |

## Claims

1. A method for producing an encapsulated polyurethane polymerization catalyst, wherein the method comprises in a variant a) the steps of
a1) Preparing a mixture comprising a solvent, an encapsulation polymer having a melting point of from 40 to 130 °C, determined by Differential Scanning Calorimetry (DSC), a polyurethane polymerization metal catalyst and a hydrophobic compound;
a2) Adding the mixture of step a1) to an aqueous solution comprising water, a non-ionic surfactant and/or an ionic surfactant to form a suspension containing the encapsulated polyurethane polymerization catalyst;
or according to a variant b), the method comprises the steps of
b1) Preparing an organic phase comprising or consisting of a water-saturated solvent solution comprising an encapsulation polymer having a melting point of from 40 to 130 °C, determined by Differential Scanning Calorimetry (DSC), a polyurethane polymerization metal catalyst and a hydrophobic compound;
b2) Preparing an aqueous phase comprising or consisting of a solvent-saturated water solution comprising a non-ionic and an ionic surfactant;
b3) Mixing the organic phase of step b1) with the aqueous phase of step b2), in particular adding the organic phase of step b1) to the aqueous phase of step b2), and emulsifying the phases to form an emulsion;
b4) Adding water to the emulsion of step b3) to form a suspension containing the encapsulated polyurethane polymerization catalyst,
wherein the hydrophobic compound in variant a) and variant b) is liquid at 25 °C and has a water miscibility at 25 °C of 5 mg/L or less and wherein in variant a)
- the hydrophobic compound is not an ester of glycerol if the aqueous solution does not comprise an ionic surfactant; and
- if no ionic surfactant is used in step a2), the non-ionic surfactant comprises a polyoxyethylenesorbitan monooleate.

2. The method according to claim 1, **characterized in that** the encapsulated polyurethane polymerization catalyst is present in the form of particles, preferably nanoparticles, wherein the particles have an average particle size (d50) of 1 to 1,000 nm, preferably 100 to 500 nm, more preferably 200 to 400 nm, most preferably 230 to 350 nm, measured by Dynamic Light Scattering according to ISO 22412:2017.

3. The method according to claim 2, **characterized in that** in step a2) or b2) the ionic surfactant is an anionic or cationic surfactant, wherein the particles have a zeta-potential of -100 to 0 mV if an anionic surfactant is used, preferably -70 to -10 mV, more preferably -50 to -15 mV, most preferably -40 to -20 mV, and wherein the particles have a zeta-potential of 0 to 100 mV if an cationic surfactant is used, preferably 20 to 80 mV, more preferably 30 to 70 mV, most preferably 40 to 60 mV, the zeta-potential being measured according to ISO 13099-2:2012 and/or that in variant a), when in step a2) no ionic surfactant is used and the non-ionic surfactant comprises polyoxyethylenesorbitan monooleate, preferably a poloxamer and a polyoxyethylenesorbitan monooleate, the particles have a zeta-potential of -100 to 0 mV, preferably -70 to -5 mV, more preferably -50 to -10 mV, even more preferably -15 to 30 mV, the zeta-potential being measured according to ISO 13099-2:2012.

4. The method according to any of the preceding claims, **characterized in that** the encapsulated polyurethane polymerization catalyst has a core-shell structure, wherein the shell comprises or consists of the encapsulation polymer and wherein the core comprises or consists of the polyurethane polymerization metal catalyst, the surfactant and the hydrophobic compound and/or that the encapsulated polyurethane polymerization catalyst is present in the form of nanocapsules and/or nanospheres.

5. The method according to any of the preceding claims, **characterized in that** the encapsulation polymer has a melting point of from 40 to 120 °C, preferably of from 45 to 80 °C, more preferably of from 50 to 70 °C and/or that the encapsulation polymer is selected from the group comprising or consisting of polycaprolactones, polycaprolactone-polylactic acid co-polymers, polyethylene glycol, polycarpolactone-poly(glycolide-co-L-lactide) co-polymers, or mixtures thereof.

6. The method according to any of the preceding claims, **characterized in that** the polyurethane polymerization metal catalyst is selected from the group comprising or consisting of metal salts, preferably metal carboxylates, more preferably zinc bis(2-ethylhexanoate), bismuth tri(2-ethylhexanoate), or mixtures thereof.

7. The method according to any of the preceding claims, **characterized in that** the non-ionic surfactant is selected from the group comprising or consisting of poloxamers and polyoxyethylenesorbitan monooleate, and/ or that the ionic surfactant is selected from sodium dodecyl sulfate, cetyltrimethylammonium bromide or mixtures thereof and/or in variant a) the non-ionic surfactant is a mixture of a poloxamer and polyoxyethylenesorbitan monooleate or a poloxamer and an ionic surfactant selected from sodium dodecyl sulfate, cetyltrimethylammonium bromide or mixtures thereof or that in variant a) if no ionic surfactant is used in step a2), the non-ionic surfactant comprises a poloxamer and a polyoxyethylenesorbitan monooleate.

8. The method according to any of the preceding claims, **characterized in that** in variant a) the hydrophobic compound is not an ester of glycerol if the aqueous solution does not comprise an ionic surfactant and comprises a polyoxyethylenesorbitan monooleate as non-ionic surfactant.

9. The method according to any of the preceding claims, **characterized in that** the hydrophobic compound is selected from the group, comprising or consisting of alkanes, aldehydes, ketones, alcohols, carboxylic acids, glycerides with at least 8 carbon atoms, preferably with at least 10 carbon atoms, wherein the hydrophobic compound is preferably selected from dodecanal, dodecane, glyceryl trioctonate or mixtures thereof.

10. The method according to any of the preceding claims, **characterized in that** the encapsulated polyurethane polymerization catalyst is separated from the suspension yielded in step a2) or b4), in particular by evaporation of the liquid phase and/or by freeze-drying.

11. The method according to any of the preceding claims, **characterized in that** in variant a) the ratio of the solvent to
• the encapsulation polymer is 0,01 to 1,5 (mL/mg), preferably 0,05 to 1,0 (mL/mg), more preferably 0,1 to 0,5 (mL/mg), even more preferably 0,15 to 0,25 (mL/mg);
• the polyurethane polymerization metal catalyst is 0,01 to 1,5 (mL/mg), preferably 0,05 to 1,0 (mL/mg), more preferably 0,1 to 0,5 (mL/mg), even more preferably 0,15 to 0,25 (mL/mg); and/or
• the hydrophobic compound is 0,01 to 1,0 (mL/mg), preferably 0,035 to 0,75 (mL/mg), more preferably 0,05 to 0,5 (mL/mg), even more preferably 0,075 to 0,2 (mL/mg);
and/or the aqueous solution contains 0,1 to 2,0 wt.-%, preferably 0,25 to 1,5 wt.-%, more preferably 0,5 to 1,0 wt.-% of the non-ionic surfactant and/or the ionic-surfactant, based on the weight of the aqueous solution and/ or that in variant b) in step b1) the ratio of the organic phase to
• the encapsulation polymer is 0,01 to 0,5 (mL/mg), preferably 0,02 to 0,3 (mL/mg), more preferably 0,03 to 0,2 (mL/mg), even more preferably 0,04 to 0,1 (mL/mg);
• the polyurethane polymerization metal catalyst is 0,01 to 0,5 (mL/mg), preferably 0,02 to 0,3 (mL/mg), more preferably 0,03 to 0,2 (mL/mg), even more preferably 0,04 to 0,1 (mL/mg); and/or
• the hydrophobic compound is 0,01 to 0,1 (mL/mg), preferably 0,015 to 0,08 (mL/mg), more preferably 0,02 to 0,07 (mL/mg), even more preferably 0,02 to 0,06 (mL/mg); and/or in step b2) the aqueous phase contains 0,1 to 2,0 wt.-%, preferably 0,5 to 1,5 wt.-%, more preferably 0,75 to 1,25 wt.-% of the non-ionic surfactant and the ionic-surfactant, based on the weight of the aqueous phase.

12. An encapsulated polyurethane polymerization catalyst obtained or obtainable by a method according to any of claims 1 to 11.

13. Use of the encapsulated polyurethane polymerization catalyst of claim 12 in latent reactive polyurethane compositions, especially in latent reactive polyurethane coating or adhesive compositions.

14. A latent reactive polyurethane composition comprising the components:
A) a polyol,
B) a polyisocyanate,
C) the encapsulated polyurethane polymerization catalyst according to claim 12, and
D) optionally auxiliary and additional compounds.

15. A method for the production of a polyurethane coating or adhesive from the latent reactive polyurethane composition of claim 14 by heating the latent reactive polyurethane composition to at least the melting point of the encapsulation polymer to release the polyurethane polymerization metal catalyst from the encapsulated polyurethane polymerization catalyst and reacting the components of the latent reactive polyurethane composition to form the polyurethane coating or adhesive.
